# EUROPÄISCHE PATENTANMELDUNG

(11) **EP 1 217 336 A1**
(43) Veröffentlichungstag der Anmeldung: **26.06.2002**
(21) Anmeldenummer: 01130372.4
(22) Anmeldetag: 20.12.2001
(51) Int. Cl.: G01F 1/40, G01F 1/36, F24F 11/00

(54) **Vorrichtung zum Messen eines Volumenstroms**

(30) Priorität: 21.12.2000 DE 20021741 U
(71) Anmelder: Gebrüder Trox, Gesellschaft mit beschränkter Haftung, D-47506 Neukirchen-Vluyn (DE)
(72) Erfinder: Sefker, Thomas Dr., 47506 Neukirchen-Vluyn (DE); Baumeister, Gregor, 47803 Krefeld (DE)
(74) Vertreter: DR. STARK & PARTNER

(57) **Zusammenfassung**

Die Erfindung betrifft eine Vorrichtung zum Messen eines Volumenstroms in klima- und/oder lüftungstechnischen Anlagen, insbesondere zum Messen und/oder Regeln eines Abluftvolumenstromes in Abzügen, mit einem Gehäuse, das wenigstens eine Einlassöffnung und wenigstens eine Auslassöffnung aufweist, wobei in dem Gehäuse wenigstens eine von einer Wand des Gehäuses ausgehende, das Gehäuse in je einen an- und einen abströmseitigen Teilbereich unterteilende Luftumlenkeinrichtung zum Umlenken des Volumenstromes innerhalb des Gehäuses vorgesehen ist, und mit wenigstens einer Duckmesseinrichtung zur Messung einer Druckdifferenz zwischen zwei in dem Gehäuse angeordneten Druckmessstellen. Um eine Vorrichtung so zu verbessern, dass eine exakte Messung des Volumenstromes bei gleichzeitig möglichst geringem Druckverlust gewährleistet ist, soll eine Druckmessstelle in dem anströmseitigen Teilbereich und die andere Druckmessstelle in dem abströmseitigen Teilbereich angeordnet sein.

## Beschreibung

Die Erfindung betrifft eine Vorrichtung zum Messen eines Volumenstroms in klima- und/oder lüftungstechnischen Anlagen, insbesondere zum Messen und/oder Regeln eines Abluftvolumenstromes in Abzügen, mit einem Gehäuse, das wenigstens eine Einlassöffnung und wenigstens eine Auslassöffnung aufweist, wobei in dem Gehäuse wenigstens eine von einer Wand des Gehäuses ausgehende, das Gehäuse in je einen an- und einen abströmseitigen Teilbereich unterteilende Luftumlenkeinrichtung zum Umlenken des Volumenstromes innerhalb des Gehäuses vorgesehen ist, und mit wenigstens einer Duckmesseinrichtung zur Messung einer Druckdifferenz zwischen zwei in dem Gehäuse angeordneten Druckmessstellen.

Zur Gewährleistung eines störungsfreien Betriebes ist es erforderlich, ständig in klima- und/oder lüftungstechnischen Anlagen u.a. den Volumenstrom zu messen und zu kontrollieren. Besonders wichtig ist die Kontrolle von Volumenströmen in Abzügen von Laborräumen oder Laboreinrichtungen bzw. Labortischen. Weicht der gemessene Wert von dem vorgeschriebenen Wert ab, so kann dies z.B. ein Anzeichen für Verunreinigungen im Abzug oder für eine zu geringe Leistung des Abzuges sein. Hinzu kommt, dass insbesondere bei Laboreinrichtungen, wie. z.B. Laborabzügen, die mit variablen Volumenströmen arbeiten, starke Veränderungen des Volumenstromes auftreten, was z. B. durch die Stellung des Frontschiebers begründet ist. Bei geöffnetem Frontschieber muss der Volumenstrom erhöht werden, während bei geschlossenem Frontschieber der Volumenstrom entsprechend geringer ist. Dies erschwert das Messen.

Problematisch erweist sich die Messung insbesondere im Hinblick auf die geringen Platzverhältnisse, da aufgrund der baulichen Gegebenenheiten üblicherweise lediglich eine geringe nutzbare Messstrecke innerhalb der klima- und/oder lüftungstechnischen Anlage zur Verfügung steht. Diese ist aber gerade für möglichst genaue Messungen erforderlich. Bei der Vorrichtung gemäß Oberbegriff dient der anströmseitige Teilbereich als Beruhigungsstrecke und der abströmseitige Bereich als Messstrecke. Die Druckmessstellen sind dabei nebeneinander, durch eine Messblende voneinander beabstandet in dem abströmseitigen Teilbereich, also innerhalb dieser Messstrecke angeordnet. Die Messblende ist erforderlich, damit überhaupt eine Druckdifferenz zwischen den beiden in der Messstrecke angeordneten Druckmessstellen gemessen wird. Als Nachteil erweist sich, dass infolge der Messblende ein hoher Druckverlust innerhalb der Vorrichtung zu verzeichnen ist, was aber nicht erwünscht ist, da entsprechend die Leistung der klimaund/oder lüftungstechnischen Anlage erhöht werden muss.

Aufgabe der Erfindung ist es daher, eine Vorrichtung der eingangs beschriebenen Gattung so zu verbessern, dass eine exakte Messung des Volumenstromes bei gleichzeitig möglichst geringem Druckverlust gewährleistet ist.

Diese Aufgabe wir dadurch gelöst, dass eine Druckmessstelle in dem anströmseitigen Teilbereich und die andere Druckmessstelle in dem abströmseitigen Teilbereich angeordnet ist. Durch die Luftumlenkeinrichtung wird ein anund ein abströmseitiger Teilbereich gebildet, wobei in dem anströmseitigen Teilbereich mit der Einlassöffnung ein höherer Druck als in dem abströmseitigen Teilbereich mit der Auslassöffnung gemessen wird. Durch die Anordnung der beiden Druckmessstellen in den verschiedenen Teilbereichen wird die zwischen den Teilbereichen herrschende Druckdifferenz gemessen, die ein Maß für den Volumenstrom ist.

Im einfachsten Fall kann das Gehäuse als Kasten mit der darin angeordneten Luftumlenkeinrichtung ausgebildet sein, wobei die Einlass- bzw. Auslassöffnung entweder an den Kanten bzw. Ecken oder in den Seitenflächen des Gehäuses vorgesehen sind. Es ist aber auch durchaus denkbar, dass das Gehäuse als Rohr ausgebildet ist, das einen im Wesentlichen halbkreisförmigen oder winkligen Verlauf aufweist. Durch die Krümmung bzw. Abwinklung des Rohres wird der anund abströmseitige Teilbereich gebildet. Die Einlass- und die Auslassöffnung sind dabei vorzugsweise endseitig an dem Rohr angeordnet, so dass der anströmseitige Teilbereich in dem an die Einlassöffnung angrenzenden Bereich und der abströmseitige Teilbereich in dem an die Auslassöffnung angrenzenden Teilbereich des Rohres vorgesehen ist. Bei einem solchen Ausführungsbeispiel dient die Wandung des Rohres einerseits als Gehäuse und andererseits als Luftumlenkeinrichtung.

Vorzugsweise kann die in dem abströmseitigen Teilbereich vorgesehene Druckmessstelle im Bereich des freien Endes der Luftumlenkeinrichtung vorgesehen sein. Durch die Umlenkung des Volumenstroms im Bereich des freien Endes entsteht auf der dem abströmseitigen Teilbereich zugewandten Seite der Luftumlenkeinrichtung ein Unterdruck, so dass zwischen dem an- und dem abströmseitigen Teilbereich eine hohe Druckdifferenz gemessen wird. Da der Unterdruck zum freien Ende am höchsten ist, ist die Druckmessstelle im abströmseitigen Teilbereich am freien Ende der Luftumlenkeinrichtung vorgesehen.

Bei einer bevorzugten Ausführungsform der Erfindung kann die in dem anströmseitigen Teilbereich vorgesehene Druckmessstelle im Einströmbreich des Gehäuses im Bereich der Luftumlenkeinrichtung angeordnet sein. Dabei ist die Druckmessstelle vorzugsweise in der Flucht der Einlassöffnung vorgesehen, so dass der in das Gehäuse einströmende Volumenstrom auf die Druckmessstelle auftrifft. Auch hierdurch wird die gemessene Druckdifferenz vergrößert.

Dabei kann die Luftumlenkeinrichtung im Wesentlichen orthogonal zur Ein- bzw. Ausströmrichtung des Volumenstromes in dem Gehäuse angeordnet sein.

Bei einer bevorzugten Ausführungsform der Erfindung kann das freie Ende der Luftumlenkeinrichtung in der Stellung und/oder der Neigung veränderbar sein. Hierdurch kann der Strömungsquerschnitt in dem abströmseitigen Teilbereich verstellt werden, so dass bei jedem Volumenstrom die Messungen mit einer hinreichenden Genauigkeit durchgeführt werden können. So wird bei geringeren Volumenströmen mittels der Verstellung des freien Endes der Luftumlenkeinrichtung der Strömungsquerschnitt verringert, so dass auch bei diese Voraussetzungen selbst geringe Schwankungen des Volumenstroms durch Messung der Druckdifferenz erfassbar sind.

Dabei kann das freie Ende der Luftumlenkeinrichtung als eine verschwenkbare mit der Luftumlenkeinrichtung verbundene, vorzugsweise über ein Gelenk verschwenkbare Leitplatte ausgebildet sein.

Bei einer anderen Ausführungform kann das freie Ende der Luftumlenkeinrichtung als eine im Wesentlichen in Richtung der Längserstreckung der Luftumlenkeinrichtung verschiebbare Leitplatte ausgebildet sein.

Dabei kann das freie Ende der Luftumlenkeinrichtung motorisch verstellbar sein.

Bei einer anderen Ausführungsform kann zur Veränderung des Strömungsquerschnittes insbesondere in dem abströmseitigen Teilbereich ein den Strömungsquerschnitt veränderndes Leitelement vorgesehen sein.

Das Leitelement kann als ein der Luftumlenkeinrichtung gegenüberliegendes, vorzugsweise schwenkbar an einer Wand des Gehäuses angelenktes Leitblech ausgebildet sein.

Zur Veränderung des Volumenstroms in der Vorrichtung kann eine in Strömungsrichtung gesehen hinter der Druckmesseinrichtung angeordnete Regelklappe vorgesehen sein. Die Regelklappe kann beispielsweise motorisch angetrieben sein. Weicht der in der Vorrichtung strömende Volumenstrom von dem vorgegebenen Volumenstrom ab, wird beispielsweise über eine Regeleinrichtung ein entsprechendes Signal an die Regelklappe gesendet, so dass die Regelklappe verstellt und insoweit der Volumenstrom verändert wird.

Bei einer bevorzugten Ausführungsform der Erfindung kann die Regelklappe mechanisch mit der Leitplatte und/oder dem Leitelement verbunden sein. Bei Verstellung der Regelklappe wird automatisch die Stellung der Leitplatte und/oder des Leitelementes verändert und insoweit dem dann herrschenden Volumenstrom angepasst.

Die Erfindung betrifft auch ein Verfahren zum Messen eines Volumenstroms in einer klima- und/oder lüftungstechnischen Anlage, insbesondere zum Messen eines Abluftvolumenstromes in einem Abzug, bei dem die Druckdifferenz mittels wenigstens einer Duckmesseinrichtung zwischen zwei in einem Gehäuse angeordneten Druckmessstellen gemessen wird, wobei das Gehäuse wenigstens eine Einlassöffnung und wenigstens eine Auslassöffnung aufweist und in dem Gehäuse zumindest eine von einer Wand des Gehäuses ausgehende, das Gehäuse in je einen an- und einen abströmseitigen Teilbereich unterteilende Luftumlenkeinrichtung zum Umlenken des Volumenstromes innerhalb des Gehäuses vorgesehen ist.

Als Nachteil erweist sich, dass bei herkömmlichen Verfahren die Druckdifferenz zwischen zwei durch eine Messblende beabstandete Druckmessstellen, die in dem abströmseitigen Teilbereich des Gehäuses vorgesehen sind, gemessen wird. Aufgrund der Messblende treten bei Messungen nach bekannten Verfahren hohe Druckverluste auf.

Aufgabe der Erfindung ist es daher, ein Verfahren anzugeben, das die Messung von Volumenströmen bei geringeren Druckverlusten erlaubt.

Diese Aufgabe wird dadurch gelöst, dass die Druckdifferenz zwischen dem anströmseitigen und dem abströmseitigen Teilbereich gemessen wird. Hierdurch kann auf die Anordnung einer Messblende verzichtet werden, so dass der Gesamtdruckverlust der Vorrichtung verringert wird.

Im Folgenden wird in den Zeichnungen ein Ausführungsbeispiel der Erfindung erläutert. Es zeigen:
- Fig. 1: einen Schnitt durch eine erfindungsgemäße Vorrichtung mit einer gegenüberliegenden Einlass- und Auslassöffnung,
- Fig. 2: einen Schnitt durch eine Vorrichtung mit einer winklig zueinander angeordneten Einlass- und Auslassöffnung,
- Fig.3: einen Schnitt durch ein anderes Ausführungsbeispiel einer Vorrichtung mit einer winklig zueinander angeordneten Einlass- und Auslassöffnung,
- Fig. 4: einen Schnitt durch eine Vorrichtung mit einem Leitblech,
- Fig. 5: einen Schnitt durch eine Vorrichtung mit einer verschwenkbaren Leitplatte,
- Fig. 6: einen Schnitt durch eine Vorrichtung mit einer verschiebbaren Leitplatte und
- Fig. 7: einen Schnitt durch eine Vorrichtung, bei der eine Regelklappe mechanisch mit der Leitplatte verbunden ist.

In allen Figuren werden für gleiche bzw. gleichartige Bauteile übereinstimmende Bezugszeichen verwendet.

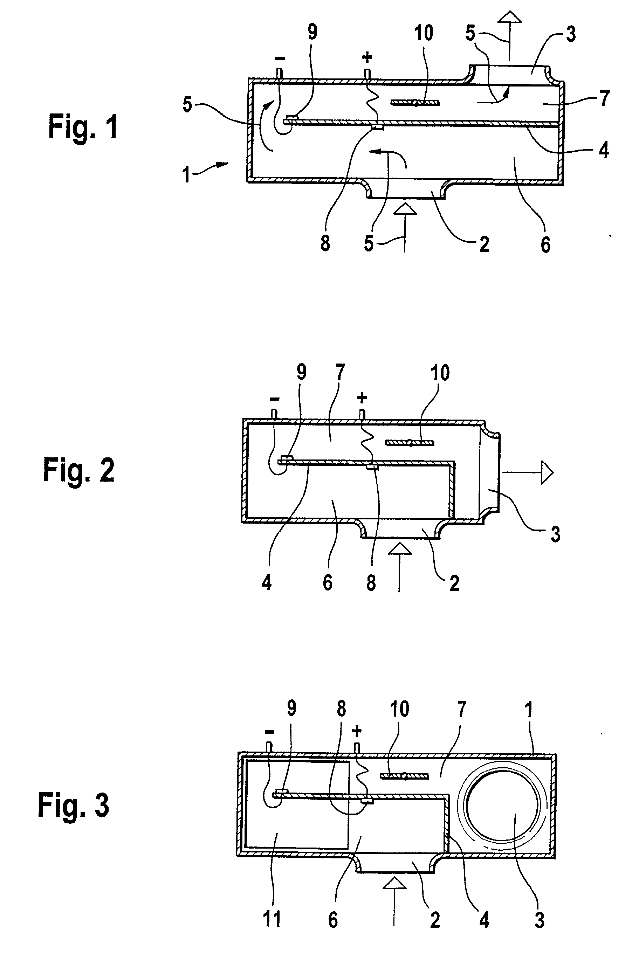

Fig. 1 zeigt eine Vorrichtung zum Messen eines Volumenstroms, die ein Gehäuse 1 aufweist, bei dem in den gegenüberliegenden Wänden eine Einlassöffnung 2 und eine Auslassöffnung 3 vorgesehen sind. Es können auch mehrere Einlass- bzw. Auslassöffnungen 2, 3 vorgesehen sein. Von einer Wand des Gehäuses 1 erstreckt sich eine Luftumlenkeinrichtung 4, die in dem dargestellten Fall als eine Trennwand ausgebildet ist, die mit den beiden Längskanten und mit der rechten Stirnseite mit den Wänden des Gehäuses 1 verbunden sind.

Die als freies Ende ausgebildete linke Stirnseite der Luftumlenkeinrichtung 4 ist im Abstand zu der entsprechenden linken Wand des Gehäuses 1 angeordnet, so dass der in das Gehäuse 1 eintretende Luftvolumenstrom in Richtung der Pfeile 5 durch das Gehäuse 1 strömen kann.

Durch die Luftumlenkeinrichtung 4 wird das Gehäuse in einen anströmseitigen Teilbereich 6 und in einen abströmseitigen Teilbereich 7 unterteilt.

Zur Messung der Druckdifferenz sind zwei Druckmessstellen 8, 9 vorgesehen. Diese können beispielsweise über Hohlleitungen mit einer nicht dargestellten Druckdifferenzanzeigevorrichtung verbunden sein. Die Druckmessstellen 8, 9 können aber auch als elektrische Messfühler ausgebildet sein, die ein druckproportionales elektrisches Signal erzeugen, das elektronisch an eine ebenfalls nicht dargestellte Druckzeigeeinrichtung weitergeleitet wird.

Die Druckmesstelle 8 misst dabei den Druck in dem anströmseitigen Teilbereich 6, während die Druckmessstelle 9 zur Messung des Druckes in dem abströmseitigen Teilbereich 7 vorgesehen ist.

Zur Messung einer hohen Druckdifferenz ist die Druckmessstelle 8 im Bereich der Flucht der Einlassöffnung 2 vorgesehen, so dass der in das Gehäuse 1 einströmende Volumenstrom direkt auf die Druckmessstelle 8 auftrifft.

Der Volumenstrom wird in dem Gehäuse 1 am freien Ende der Luftumlenkeinrichtung 4 umgelenkt, so dass im Bereich des freien Endes auf der dem abströmseitigen Teilbereich 7 zugewandten Seite ein Unterdruck auftritt. Im Bereich des freien Endes ist daher vorteilhafterweise die Druckmessstelle 9 vorgesehen. Hierdurch wird über die Druckmessstellen 8, 9 eine hohe Druckdifferenz gemessen.

Zur Einstellung des Volumenstroms ist bei dem dargestellten Ausführungsbeispiel eine Regelklappe 10 in dem abströmseitigen Teilbereich 7 vorgesehen. Die Regelklappe 10 wird beispielsweise über einen Motor in ihrer Stellung geändert. Die Verstellung kann manuell oder motorisch erfolgen. Vorteilhafterweise ist der Antrieb der Regelkappe 10 mit der Druckmesseinrichtung verbunden, so dass eine automatische Regelung möglich ist.

Bei dem in Fig. 2 dargestellten Ausführungsbeispiel der Erfindung sind die Einlass- und Auslassöffnungen 2, 3 winklig zueinander angeordnet. Insoweit ist auch die Luftumlenkeinrichtung 4 entsprechend angepasst.

Fig. 3 zeigt ein ähnliches Ausführungsbeispiel einer Vorrichtung gemäß Fig. 2 mit dem Unterschied, dass die Auslassöffnung 3 nicht in einer Stirnseite des Gehäuses 1, sondern in einer Seitenfläche vorgesehen ist. Zu Wartungszwecken ist gleichzeitig eine Wartungsöffnung 11 vorgesehen, wobei diese so angeordnet ist, dass die Druckmessstellen 8, 9 leicht zugänglich sind.

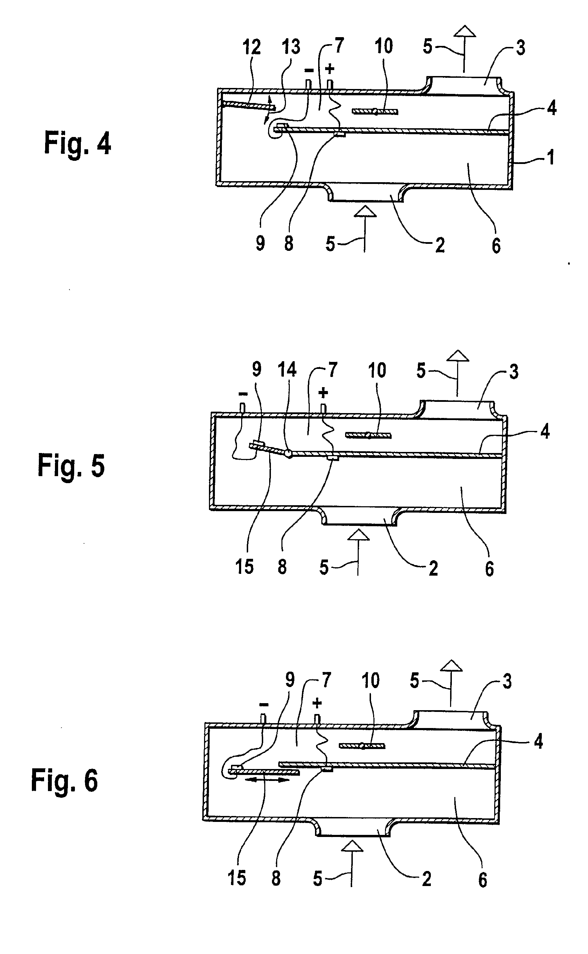

Damit die erfindungsgemäße Vorrichtung sowohl bei geringen als auch bei hohen Volumenströmen einsetzbar ist, ist bei dem Ausführungsbeispiel nach Fig. 4 zusätzlich ein Leitblech 12 vorgesehen, das in dem dargestellten Ausführungsbeispiel schwenkbar in Richtung der Pfeile 13 innenseitig an einer Stirnwand des Gehäuses 1 gelagert ist. Je nach der Stellung des Leitbleches 12 wird der Strömungsquerschnitt variiert, so dass auch bei geringen Volumenströmen exakte Druckdifferenzen gemessen werden.

Bei der in Fig. 5 dargestellten Ausführungsform ist das freie Ende der Luftumlenkeinichtung 4 als über ein Gelenk 14 verschwenkbare Leitplatte 15 ausgebildet. Sofern die Leitplatte 15 sich in der Flucht der Luftumlenkeinrichtung 4 befindet, steht im Bereich des abströmseitigen Teilbereichs 7 der maximale Strömungsquerschnitt zur Verfügung. Eine solche Stellung der Leitplatte 15 wird bei hohen Volumenströmen gewählt. Sofern der Volumenstrom geringer ist, wird die Leitplatte 15 in Richtung der oberseitigen Wand des Gehäuses 1 verschwenkt. Die Druckmessstelle 9 ist dabei im Bereich der Leitplatte 15 vorgesehen.

Bei der in Fig. 6 dargestellten Ausführungsform ist statt einer verschwenkbaren Leitplatte 15 eine in Richtung der Längserstreckung der Luftumlenkeinrichtung 4 verschiebbare Leitplatte 15 vorgesehen.

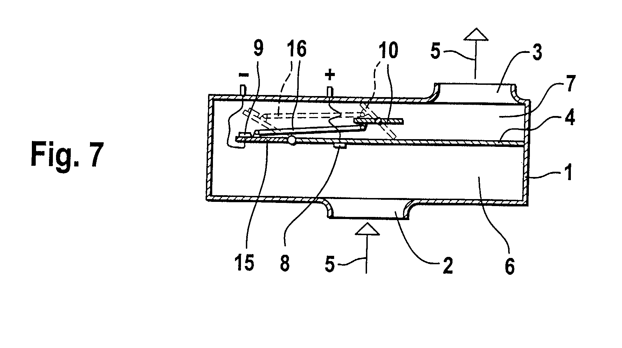

Bei der in Fig. 7 dargestellten Ausführungsform ist die Regelklappe 10 über ein Gestänge 16 mit der Leitplatte 15 verbunden. Bei Veränderung der Stellung der Regelklappe 10 wird automatisch die Stellung der Leitplatte 15 entsprechend geändert, so dass der in dem abströmseitigen Teilbereich 7 verbleibende Strömungsquerschnitt der Stellung der Regelklappe 10 angepasst wird. Je mehr die Regelklappe 10 den abströmseitigen Teilbereich 7 verschließt, desto mehr wird die Leitplatte 15 über das Gestänge 16 in die gestrichelte Position bewegt.

## Patentansprüche

1. Vorrichtung zum Messen eines Volumenstroms in klima- und/oder lüftungstechnischen Anlagen, insbesondere zum Messen und/oder Regeln eines Abluftvolumenstromes in Abzügen, mit einem Gehäuse (1), das wenigstens eine Einlassöffnung (2) und wenigstens eine Auslassöffnung (3) aufweist, wobei in dem Gehäuse (1) wenigstens eine von einer Wand des Gehäuses (1) ausgehende, das Gehäuse (1) in je einen an- und einen abströmseitigen Teilbereich (6, 7) unterteilende Luftumlenkeinrichtung (4) zum Umlenken des Volumenstromes innerhalb des Gehäuses (1) vorgesehen ist, und mit wenigstens einer Duckmesseinrichtung zur Messung einer Druckdifferenz zwischen zwei in dem Gehäuse (1) angeordneten Druckmessstellen (8, 9), **dadurch gekennzeichnet, dass** eine Druckmessstelle (9) in dem anströmseitigen Teilbereich (6) und die andere Druckmessstelle (8) in dem abströmseitigen Teilbereich (7) angeordnet ist.

2. Vorrichtung nach Anspruch 1, **dadurch gekennzeichnet, dass** die in dem abströmseitigen Teilbereich (7) vorgesehene Druckmessstelle (9) im Bereich des freien Endes der Luftumlenkeinrichtung vorgesehen ist.

3. Vorrichtung nach Anspruch 1 oder 2, **dadurch gekennzeichnet, dass** die in dem anströmseitigen Teilbereich (6) vorgesehene Druckmessstelle (8) im Einströmbreich des Gehäuses (1) im Bereich der Luftumlenkeinrichtung (4) angeordnet ist.

4. Vorrichtung nach einem der Ansprüche 1 bis 3, **dadurch gekennzeichnet, dass** die Luftumlenkeinrichtung (4) im Wesentlichen orthogonal zur Ein- bzw. Ausströmrichtung des Volumenstromes in dem Gehäuse (1) angeordnet ist.

5. Vorrichtung nach einem der Ansprüche 1 bis 4, **dadurch gekennzeichnet, dass** das freie Ende der Luftumlenkeinrichtung (4) in der Stellung und/oder der Neigung veränderbar ist.

6. Vorrichtung nach Anspruch 5, **dadurch gekennzeichnet, dass** das freie Ende der Luftumlenkeinrichtung (4) als eine verschwenkbare mit der Luftumlenkeinrichtung (4) verbundene, vorzugsweise über ein Gelenk (14) verschwenkbare Leitplatte (15) ausgebildet ist.

7. Vorrichtung nach Anspruch 5, **dadurch gekennzeichnet, dass** das freie Ende der Luftumlenkeinrichtung (4) als eine im Wesentlichen in Richtung der Längserstreckung der Luftumlenkeinrichtung (4) verschiebbare Leitplatte (15) ausgebildet ist.

8. Vorrichtung nach einem der Ansprüche 5 bis 7, **dadurch gekennzeichnet, dass** das freie Ende der Luftumlenkeinrichtung (4) motorisch verstellbar ist.

9. Vorrichtung nach einem der Ansprüche 1 bis 8, **dadurch gekennzeichnet, dass** insbesondere in dem abströmseitigen Teilbereich (7) ein den Strömungsquerschnitt veränderndes Leitelement vorgesehen ist.

10. Vorrichtung nach Anspruch 9, **dadurch gekennzeichnet, dass** das Leitelement als ein der Luftumlenkeinrichtung (4) gegenüberliegendes, vorzugsweise schwenkbar an einer Wand des Gehäuses (1) angelenktes Leitblech (12) ausgebildet ist.

11. Vorrichtung nach einem der Ansprüche 1 bis 10, **dadurch gekennzeichnet, dass** eine in Strömungsrichtung gesehen hinter der Druckmesseinrichtung angeordnete Regelklappe (10) vorgesehen ist.

12. Vorrichtung nach Anspruch 11, soweit dieser auf die Ansprüche 8 bis 10 rückbezogen ist, **dadurch gekennzeichnet, dass** die Regelklappe (10) mechanisch mit der Leitplatte (15) und/oder dem Leitelement verbunden ist.

13. Verfahren zum Messen eines Volumenstroms in einer klima- und/oder lüftungstechnischen Anlage, insbesondere zum Messen eines Abluftvolumenstromes in einem Abzug, bei dem die Druckdifferenz mittels wenigstens einer Duckmesseinrichtung zwischen zwei in einem Gehäuse (1) angeordneten Druckmessstellen (8, 9) gemessen wird, wobei das Gehäuse (1) wenigstens eine Einlassöffnung (2) und wenigstens eine Auslassöffnung (3) aufweist und in dem Gehäuse (1) zumindest eine von einer Wand des Gehäuses (1) ausgehende, das Gehäuse in je einen an- und einen abströmseitigen Teilbereich (6, 7) unterteilende Luftumlenkeinrichtung (4) zum Umlenken des Volumenstromes innerhalb des Gehäuses (1) vorgesehen ist, **dadurch gekennzeichnet, dass** die Druckdifferenz zwischen dem anströmseitigen und dem abströmseitigen Teilbereich (6, 7) gemessen wird.
